# EUROPEAN PATENT SPECIFICATION

(11) **EP 3 779 618 B1**
(45) Date of publication and mention of the grant of the patent: **13.07.2022**
(21) Application number: 18927201.6
(22) Date of filing: 13.12.2018
(51) Int. Cl.: G05B 15/02

(54) **SMART APPARATUS CONTROL METHOD, APPARATUS, COMPUTER STORAGE MEDIUM, AND SMART APPARATUS CONTROL APPARATUS**
STEUERUNGSVERFAHREN FÜR INTELLIGENTE VORRICHTUNG, VORRICHTUNG, COMPUTERSPEICHERMEDIUM UND STEUERUNGSVORRICHTUNG FÜR INTELLIGENTE VORRICHTUNG
PROCÉDÉ DE COMMANDE D'APPAREIL INTELLIGENT, APPAREIL, SUPPORT D'INFORMATIONS INFORMATIQUE ET APPAREIL DE COMMANDE D'APPAREIL INTELLIGENT

(30) Priority: 19.07.2018 CN 201810794481
(43) Date of publication of application: 17.02.2021
(73) Proprietor: Gree Electric Appliances, Inc. of Zhuhai, Zhuhai, Guangdong 519070 (CN)
(72) Inventor: LIAO, Hailin, Zhuhai, Guangdong 519070 (CN); WANG, Huijun, Zhuhai, Guangdong 519070 (CN); MAO, Yuehui, Zhuhai, Guangdong 519070 (CN); LIAO, Hufeng, Zhuhai, Guangdong 519070 (CN)
(74) Representative: Appleyard Lees IP LLP
(86) International application number: PCT/CN2018/120920
(87) International publication number: WO 2020/015288

(56) References cited:
- EP-A1- 3 203 632
- CN-A- 103 731 617
- CN-A- 104 866 078
- CN-A- 105 222 270
- CN-A- 105 869 381
- CN-A- 106 971 718
- CN-A- 107 145 221
- CN-A- 107 528 755
- CN-U- 202 363 104

## Description

### TECHNICAL FIELD

The present application relates to the field of an intelligent control technology, and particularly to a control method for an intelligent device, a control apparatus for an intelligent device, and a computer storage medium.

### BACKGROUND

With the continuous advancement of science and technology, intelligent devices are gradually integrated into people's lives, and the voice technology widely used in the field of intelligent devices has become familiar. For example: the voice technology has been well applied in intelligent devices such as mobile phones, loudspeakers, refrigerators, air conditioners and so on.

In the field of intelligent devices, the voice technology is easy to use and has a high frequency of use, and a user can control an intelligent device through voice to perform operations required by the user at any time. However, the current use of the voice technology to control intelligent devices still has defects, that is, every time the user needs to control an intelligent device, the user needs to input voice information for controlling the intelligent device, especially when the intelligent device needs to be controlled to perform the same or similar operations, the user needs to constantly input the same or similar voice information. For example, when a user uses a music player, the user needs to input voice information for "the previous piece of music" or "the next piece of music" every time the user switches piece of music. In another example, when the user uses the air conditioner, each time the temperature of the air conditioner needs to be adjusted, a required temperature value should be input.

The document CN 103731617 discloses a volume adjustment method and device for a smart television. According to the volume adjustment method and device of the smart television, an audio and video playing volume value of the smart television and a volume value of the sound effect of a system are stored independently. The volume adjustment method of the smart television includes the steps that when a volume adjustment request is received, an adjustment direction is determined; if the adjustment direction indicates that the volume is increased, the current volume value of the sound effect of the system is read, and a target volume value is determined according to a preset stepping value; whether the target volume value exceeds a preset first volume threshold value is judged; if the target volume value exceeds the preset first volume threshold value, the volume value of the sound effect of the system is set to be the first volume threshold value.

The document CN 107528755 A discloses an intelligent equipment control method and device, earphone equipment, intelligent equipment and a storage medium. The method includes the steps that voice information transmitted by a user is received; a corresponding control instruction is generated according to the voice information; target intelligent equipment of a control instruction to be performed is determined from the voice information; a connection request is transmitted to the target intelligent equipment, and communication connection with the target intelligent equipment is established; and the control instruction is transmitted to the target intelligent equipment through communication connection, the target intelligent equipment performs corresponding operation according to the control instruction.

### SUMMARY

The present invention provides a control method for an intelligent device, which includes: acquiring an execution mode after receiving an operation instruction transmitted by an input device; adjusting a parameter value in the execution mode according to a variable value corresponding to the operation instruction; generating a control instruction according to an adjusted execution mode, and transmitting the control instruction to the intelligent device to be controlled; further includes: before receiving the operation instruction transmitted by the input device, receiving an execution mode transmitted by a voice module; storing the execution mode transmitted by the voice module, and generating a control instruction according to the execution mode transmitted by the voice module, so as to transmit the control instruction to the intelligent device to be controlled; the execution mode transmitted by the voice module is obtained by collecting voice information inputted by a user and performing voice recognition on the voice information; the acquiring the execution mode comprises: reading a previously stored execution mode; the generating the control instruction according to the adjusted execution mode comprises: updating the previously stored execution mode and generating the control instruction according to the adjusted execution mode; the acquiring the execution mode after receiving the operation instruction transmitted by the input device comprises: acquiring the execution mode after receiving the operation instruction transmitted by the input device through a wireless transmission manner or a wire transmission manner.

In some embodiments, the operation instruction transmitted by the input device is a first operation instruction or a second operation instruction; a variable value corresponding to the first operation instruction is "+1", a variable value corresponding to the second operation instruction is "-1".

In some embodiments, before transmitting the control instruction to the intelligent device to be controlled, the control method for the intelligent device further includes: determining an intelligent device corresponding to a mode parameter in the execution mode as the intelligent device to be controlled according to a preset corresponding relationship between a mode parameter and an intelligent device; or determining an intelligent device corresponding to intelligent device information in the execution mode as the intelligent device to be controlled according to the intelligent device information.

In some embodiments, the input device is a device including a mechanical control element or a virtual key.

In some embodiments, the mechanical control element is a rocker control element or a roller control element.

The present invention further provides a control apparatus for an intelligent device, which includes a processor and a memory; the processor is configured to execute an intelligent device control program stored in the memory to implement the above-mentioned control method for the intelligent device.

The present invention further provides a computer storage medium, storing one or more programs capable of being executed by one or more processors to implement the above-mentioned control method for the intelligent device.

### BRIEF DESCRIPTION OF THE DRAWINGS

FIG. 1 is a flow chart showing a control method for an intelligent device according to some embodiments of the present invention;
FIG. 2 is a schematic structure diagram of an intelligent device control system according to some embodiments of the present invention;
FIG. 3 is a flow chart showing a control method for an intelligent device according to other embodiments of the present invention; and
FIG. 4 is a schematic structure diagram of a control apparatus for an intelligent device according to some embodiments of the present invention.

### DETAILED DESCRIPTION OF THE EMBODIMENTS

The exemplary embodiments will be described in detail here, and examples thereof are shown in the accompanying drawings. When the following description refers to the accompanying drawings, unless otherwise indicated, the same numbers in different drawings denote the same or similar elements. The implementation ways described in the following exemplary embodiments do not represent all implementation ways consistent with the present invention, rather, they are only examples of apparatus and method consistent with some aspects of the present invention as detailed in the appended claims.

In related technologies, an intelligent deice is controlled merely by the voice technology, which requires a user to constantly input voice information. Such mode is not friendly enough for the user and the user experience is not good.

The present invention provides a control method for an intelligent device, a control apparatus for an intelligent device and a computer storage medium, so as to at least solve the problem in the related technologies that the intelligent device is controlled merely by the voice technology, which requires a user to frequently input voice information.

An embodiment of the present invention provides a control method for an intelligent device. An executive body in the embodiment is a logic control unit. The logic control unit is configured to control an intelligent device. Controlling of the intelligent device means controlling of a function of the intelligent device.

The logic control unit can be provided in a local area network (LAN) where the intelligent device is located, such as in a gateway or an LAN server. The logic control unit can also be provided in a control device configured to control the intelligent device, such as in a remote controller, a mobile terminal, etc. The logic control unit can also be provided in a cloud platform. As long as the intelligent device is located in an environment where the logic control unit is located, or the intelligent device is connected to the local area network or the cloud platform where the logic control unit is located, the control method for the intelligent device in the embodiments can be implemented.

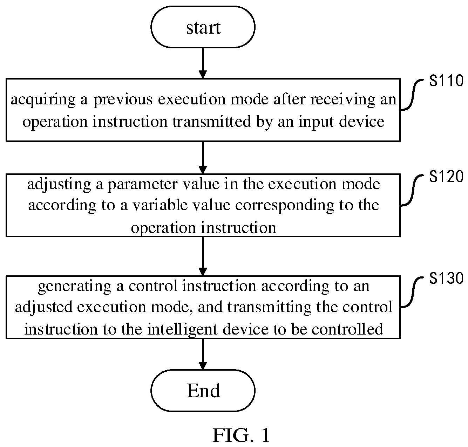

FIG. 1 is a flow chart showing a control method for an intelligent device according to some examples of the present invention.

Step S 110: a previous execution mode is acquired after receiving an operation instruction transmitted by an input device.

The input device is a device including a mechanical control element or a virtual key. The mechanical control element is a rocker control element or a roller control element.

The execution mode is configured to generate a control instruction. The previous execution mode refers to an execution mode used when the control command is generated last time. The control instruction generated last time may be a control instruction generated based on an execution mode which is obtained according to the voice information, or a control instruction generated based on an execution mode which is adjusted according to an operation instruction, which will be described in detail later.

The operation instruction transmitted by the input device is configured to adjust a value of a parameter in the execution mode, so as to obtain a new execution mode.

Specifically, the input device may be an independent mechanical control element, or a control device provided with a mechanical control element or a virtual key. The control device can be a remote controller, a mobile terminal, etc. For example, the input device is a rocker controller or a roller controller which can be manually operated by the user. In another example, the input device is a remote controller, and the remote controller is provided with a rocker and a roller which can be manually operated by the user. In further another example, the input device is a mobile terminal, and a virtual key which can be clicked by the user is provided in the mobile terminal.

The input device and the logic control unit can be provided independently or integrated in one device, for example, integrated in the control device. The input device and the logic control unit are connected wirelessly or are wired. The logic control unit receives an operation instruction transmitted by the input device through a wireless transmission manner or a wire transmission manner. The wireless transmission manner includes but is not limited to: a Wireless Fidelity (WiFi) mode, a Bluetooth mode, an infrared mode, and a radio frequency mode.

The execution mode includes but not limited to the following information: a mode parameter and a parameter value thereof. The mode parameter corresponds to a function of the intelligent device. The mode parameter is, for example, a temperature, a music, a volume, etc. The parameter value is a numerical value, and the unit can refer to the mode parameter corresponding to the parameter value. Of course, the execution mode may further include intelligent device information.

Since the control instruction is generated in the logic control unit, the logic control unit can store the execution mode configured to generate the control instruction. In such a way, the previous execution mode can be obtained from the logic control unit, and of course can also be obtained from an intelligent device to be controlled through a request because the intelligent device to be controlled is a target device of the control instruction.

Step S120: a parameter value in the execution mode is adjusted according to a variable value corresponding to the operation instruction.

Transmission of different operation instructions can be triggered by operating the rocker control element and the roller control element in different modes.

An operation instruction transmitted by the input device is a first operation instruction or a second operation instruction; a variable value corresponding to the first operation instruction is "+1", and a variable value corresponding to the second operation instruction is "-1".

After the first operation instruction transmitted by the input device is received, a value "1" is added to the parameter value in the execution mode according to the variable value corresponding to the first operation instruction.

After the second operation instruction transmitted by the input device is received, the parameter value in the execution mode is subtracted by a value "1" according to the variable value corresponding to the second operation instruction.

If the mode parameter and the parameter value thereof are included in the execution mode, the adjustment of the parameter value in the execution mode refers to the adjustment of the parameter value of the mode parameter in the execution mode. Different mode parameter has different meaning. The variable value corresponding to the operation instruction can be configured to adjust the parameter value of the mode parameter, accordingly the variable value corresponding to different operation instruction has different meaning. For example, if the mode parameter is a temperature, the variable value (+1) corresponding to the first operation command means the temperature plus 1 degree; the variable value (-1) corresponding to the second operation command means the temperature minus 1 degree. If the mode parameter is music, the variable value (+1) corresponding to the first operation instruction indicates the next piece of music to play, and the variable value (-1) corresponding to the second operation command indicates the previous piece of music to play.

Step S130: a control instruction is generated according to the adjusted execution mode, and is transmitted to an intelligent device to be controlled.

The control logic is generated according to the adjusted execution mode, then the control instruction is generated according to the control logic, and then the generated control instruction is transmitted to the intelligent device to be controlled, to perform the control instruction by the intelligent device to be controlled in order to implement the control of the intelligent device to be controlled.

If the logic control unit is configured to control an intelligent device, the intelligent device is regarded as the intelligent device to be controlled, and the generated control instruction is directly transmitted to the intelligent device to be controlled. For example, if the logic control unit is only configured to control the air conditioner, the control instruction generated each time is directly transmitted to the air conditioner.

If the logic control unit is configured to control a plurality of intelligent devices, it is needed to determine the intelligent device to be controlled according to the execution mode before the control instruction is transmitted to the intelligent device to be controlled. Since the mode parameter is not changed in the previous execution mode and the adjusted execution mode, the intelligent device to be controlled can be determined according to the previous execution mode or the adjusted execution mode.

Two modes for determining the intelligent device to be controlled are provided below, but those skilled in the art should know that the following two modes are merely used for illustrating the present invention, rather than limiting the present invention.

Mode one: the execution mode includes: a mode parameter and a parameter value thereof; a corresponding relationship between the mode parameter and an intelligent device is preset; the intelligent device corresponding to the mode parameter in the execution mode is determined as an intelligent device to be controlled according to the preset corresponding relationship between the mode parameter and the intelligent device. For example, categories of the mode parameters include: a temperature, a music, and a channel. It can be set that the temperature corresponds to an air conditioner, the music corresponds to a loudspeaker, and the channel corresponds to a television. In such a way, the intelligent device to be controlled can be determined as the air conditioner, loudspeaker or television according to the mode parameter in the execution mode.

Mode two: the execution mode includes: intelligent device information, a mode parameter, and a parameter value of the mode parameter; the intelligent device information corresponds to the intelligent device one to one, and the intelligent device information can be a unique code of the intelligent device; the intelligent device corresponding to the intelligent device information is determined as the intelligent device to be controlled according to the intelligent device information in the execution mode. For example, the home environment includes a living room air conditioner, a bedroom air conditioner and a study room air conditioner. The unique code of the living room air conditioner is 001, the unique code of bedroom air conditioner is 002, and the unique code of study room air conditioner is 003. In such a way, it could be possible to determine whether the intelligent device to be controlled is the living room air conditioner, the bedroom air conditioner or the study room air conditioner according to the unique code in the execution mode.

In the example, the execution mode can reflect a control logic. After the previous execution mode is acquired, only the parameter value is adjusted according to an operation instruction, but the mode parameter is not adjusted, so that the adjusted execution mode inherits the previous control logic.

After the intelligent device is controlled by the voice control, the control method for the intelligent device in the embodiment can be used for subsequent control of the intelligent device. By operating the input device, a control instruction generated currently inherits a control logic of a control command generated previously. Therefore, the control efficiency of the intelligent device is improved, and the operation of the input device is easy, without needing the user to input voice information frequently, the flexibility of the operation is increased, and the control process is more user-friendly.

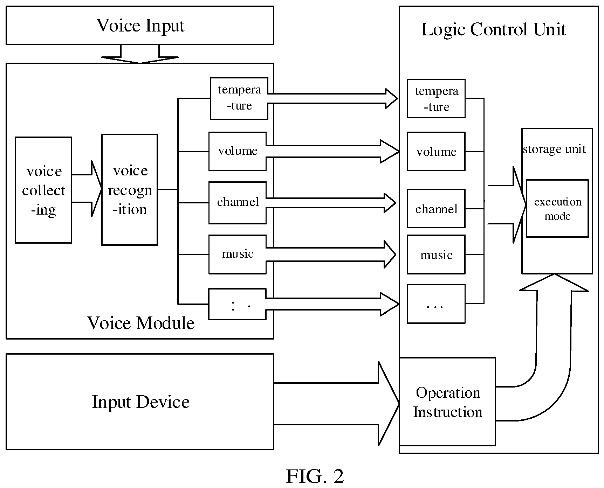

FIG. 2 is a structure diagram illustrating an intelligent device control system according to some examples of the present invention.

In the example, the intelligent device control system includes: a voice module, an input device, and a logic control unit.

The voice module is configured to collect voice information inputted by a user, perform voice recognition on the voice information, obtain an execution mode, and transmit the execution mode to the logic control unit.

The input device is configured to transmit an operation instruction corresponding to a user operation to the logic control unit according to the user operation.

The logic control unit is configured to adjust a previous execution mode according to the operation instruction to generate a control instruction, or directly generate the control instruction according to the execution mode transmitted by the voice module, and transmit the control instruction to an intelligent device to be controlled.

Further, when the same function of the same intelligent device (corresponding to the same mode parameter) is controlled, the voice module works before the input device. If the logic control unit receives the execution mode transmitted by the voice module, the logic control unit stores the execution mode and generates the control instruction according to the execution mode. If the logic control unit receives the operation instruction transmitted by the input device, the logic control unit adjusts a parameter value in a previously used execution mode according to a variable value corresponding to the operation instruction, obtains and stores a new execution mode, and generates a control instruction according to the new execution mode.

There are no restrictions on setting modes of the voice module, the input device and the logic control unit.

The voice module, the input device and the logic control unit can be integrated into the control device. The voice module, the input device and the logic control unit are connected in a wired mode, and the control device controls the intelligent device in a wireless mode. For example, after the logic control unit generates the control instruction, the control device transmits the control instruction to the intelligent device through an infrared mode. Another example, the control device is connected to a local area network (LAN) or a cloud platform where the intelligent device is located; after the logic control unit generates the control instruction, the control device transmits the control instruction to an LAN server or the cloud platform through WiFi, and then the LAN server or the cloud platform transmits the control instruction to the intelligent device.

The voice module, the input device and the logic control unit can also be provided separately. The voice module can be provided on the control device, such as on a remote controller or a mobile terminal; the input device can be used as an independent mechanical control element; the logic control unit can be provided in the LAN server. The voice module wirelessly transmits the execution mode to the logic control unit, and the input device wirelessly transmits the operation instruction to the logic control unit.

Based on the above-mentioned intelligent device control system, some more specific embodiments are given to further illustrate the present invention.

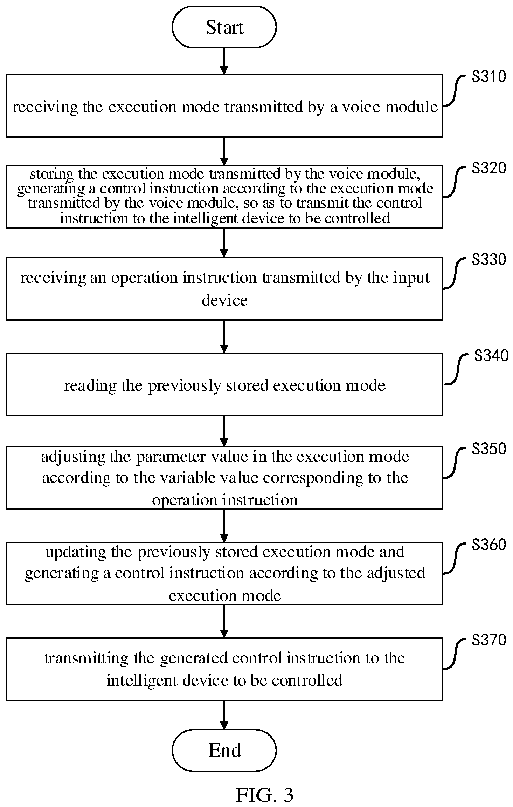

FIG. 3 is a flow chart showing a control method for an intelligent device according to embodiments of the present invention. An executive body of each step in the flow chart of FIG. 3 is a logic control unit.

Step S310: the execution mode transmitted by the voice module is received.

The execution mode transmitted by the voice module is obtained by collecting voice information inputted by the user and performing voice recognition on the voice information.

Specifically, every time when the user needs to control a new function, the user inputs voice information to the voice module through a voice input mode; the voice module collects the voice information inputted by the user, performs semantic interpretation on the voice information through the voice recognition, and determines a mode parameter and a parameter value thereof expressed by the voice information; and then the execution mode is obtained. Finally, the voice module transmits the execution mode to the logic control unit.

Step S320: the execution mode transmitted by the voice module is stored, a control instruction is generated according to the execution mode transmitted by the voice module, and the control instruction is transmitted to the intelligent device to be controlled.

Since the user controls the new function through the voice control mode this time, the current control instruction generated does not need to inherit the previous control logic, i.e., the current control instruction can be generated directly according to the execution mode transmitted by the voice module.

Since a control instruction generated next time may need to inherit the current control logic, the current execution mode needs to be stored in a storage unit in the logic control unit.

Step S330: an operation instruction transmitted by the input device is received.

The input device is, for example, a rocker controller or a roller controller. The rocker controller and the roller controller can transmit different operation instructions according to different operations.

For example, an operation instruction transmitted through a clockwise operation of the rocker controller is an operation instruction indicating to add one (a first operation instruction), and an operation instruction transmitted through a counterclockwise operation of the rocker controller is an operation instruction indicating to subtract one (a second operation instruction).

Another example, an operation instruction transmitted through a scroll up operation of the roller controller is an operation instruction indicating to add one, and an operation instruction transmitted through a scroll down operation of the roller controller is an operation instruction indicating to subtract one.

After the intelligent device to be controlled is controlled through the voice control mode, the intelligent device to be controlled can be further controlled through the input device. The operation instruction transmitted by the input device is an operation instruction to simply increase by one or subtract one; the execution mode used previously is adjusted according to the operation instruction, then the control logic of the control instruction generated previously can be inherited without needing to input the mode parameter and the parameter value thereof through the voice control mode, thereby simplifying the control process.

Step S340: the previously stored execution mode is read.

The logic control unit stores the previously used execution mode in the storage unit, and then can read the previous execution mode stored in the storage unit.

In the embodiment, the previously stored execution mode is an execution mode transmitted by the voice module.

Step S350: the parameter value in the execution mode is adjusted according to the variable value corresponding to the operation instruction.

Step S360: the previously stored execution mode is updated and a control instruction is generated according to the adjusted execution mode.

Since an operation instruction transmitted by the input device may also be received next time, the previous execution mode stored in the storage unit is updated by using the adjusted execution mode, so as to take the updated execution mode as the previous execution mode after a next operation instruction transmitted by the input device is received, such that the generated control instruction can inherit the control logic of the previously generated control instruction.

Step S370: the generated control instruction is transmitted to the intelligent device to be controlled.

In the embodiment, the voice control does not need to inherit the control logic of the previous control instruction, and the control instruction can be directly generated according to the execution mode recognized by the voice module. A first control instruction of the input device inherits the control logic of the previous control instruction generated according to the voice control, a second control instruction of the input device inherits the control logic of the previous control instruction generated according to the control of the input device, and so on.

For example, the user previously controls the volume of the loudspeaker, and now wants to control the temperature of the air conditioner. At this time, the voice information "volume, eighteen degrees" can be input through the voice module, and the voice module determines the mode parameter as "temperature" and the parameter value as "eighteen degrees" through the voice recognition, and then obtains the execution mode "temperature, eighteen degrees", and transmits the execution mode "temperature, eighteen degrees" to the logic control unit; the logic control unit receives the execution mode "temperature, eighteen degrees", and stores the execution mode in the storage unit and generate a control instruction to control the air conditioner to adjust the temperature to 18; at this time, the user operates the rocker controller counterclockwise; the rocker controller transmits an operation instruction indicating to subtract one to the logic control unit through a transmission carrier; the logic control unit receives the operation instruction indicating to subtract one, reads the previous execution mode "temperature, eighteen degrees" stored in the storage unit, and subtracts one from the parameter value "eighteen degrees" in the previous execution mode to obtain a new execution mode "temperature, seventeen degrees"; the storage unit is updated and a control instruction is generated to control the air conditioner to adjust the temperature to seventeen degrees; after that, the user operates the rocker controller clockwise; the rocker controller transmits an operation instruction indicating to add one to the logic control unit through the transmission carrier; the logic control unit receives the operation instruction indicating to add one, reads the previous execution mode "temperature, seventeen degrees" stored in the storage unit, adds one to the parameter value "seventeen degrees" in the previous execution mode, and obtains a new execution mode "temperature, eighteen degrees"; the storage unit is updated and a control instruction is generated to control the air conditioner to adjust the temperature to eighteen degrees.

In the embodiment, the intelligent device is controlled through the voice control and the control of the input device. A certain mode parameter of the intelligent device is first controlled by using the convenience of the voice control; after the voice control, a control of the input device inherits the control logic of the previous control instruction, thereby reducing unnecessary voice operations, solving the problem that the simple voice control mode requires the user to frequently input voice information, and improving the user engagement and experience.

In the embodiment, the currently generated control instruction inherits the control logic of the previous control instruction through the control of the input device, so that the same operation instruction can realize different functions under different voice control instructions.

Communication and interaction between the intelligent device and the user in the embodiment are more convenient and humanized. Modes of the voice control and input device control greatly improve the efficiency of the voice control and takes advantage of voice control to the right.

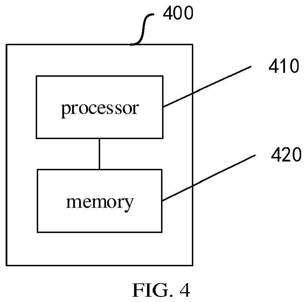

An embodiment of the present invention provides a control apparatus for an intelligent device. As shown in FIG. 4, which is a structure diagram illustrating a control apparatus for an intelligent device according to some embodiments of the present invention.

In the embodiment, the control apparatus 400 for the intelligent device includes, but is not limited to: a processor 410 and a memory 420.

The processor 410 is configured to execute an intelligent device control program stored in the memory 420 to implement the control method for the intelligent device described in the first embodiment and the second embodiment.

Specifically, the processor 410 is configured to execute the intelligent device control program stored in the memory 420 to implement the following steps of: acquiring a previous execution mode after receiving an operation instruction transmitted by an input device; adjusting a parameter value in the execution mode according to a variable value corresponding to the operation instruction; generating a control instruction according to the adjusted execution mode, and transmitting the control instruction to an intelligent device to be controlled.

In some embodiments, the processor 410 is configured to execute the intelligent device control program stored in the memory 420, to further implement the following steps of: receiving an execution mode transmitted by a voice module before receiving the operation instruction transmitted by the input device; storing the execution mode transmitted by the voice module, and generating a control instruction according to the execution mode transmitted by the voice module, to transmit the control instruction to the intelligent device to be controlled; the execution mode transmitted by the voice module is obtained by collecting voice information inputted by the user and performing voice recognition on the voice information.

In some embodiments, the processor 410 is configured to execute the intelligent device control program stored in the memory 420, to further implement the following steps of: reading the previously stored execution mode; generating the control instruction according to the adjusted execution mode, which includes a step of: updating the previously stored execution mode and generating the control instruction according to the adjusted execution mode.

In some embodiments, the operation instruction transmitted by the input device is a first operation instruction or a second operation instruction; a variable value corresponding to the first operation instruction is "+1"; a variable value corresponding to the second operation instruction is "-1".

In some embodiments, the processor 410 is configured to execute the intelligent device control program stored in the memory 420, to further implement the following steps of: determining an intelligent device corresponding to the mode parameter in the execution mode as the intelligent device to be controlled according to a preset corresponding relationship between the mode parameter and the intelligent device before transmitting the control instruction to the intelligent device to be controlled; or, determining the intelligent device corresponding to intelligent device information as the intelligent device to be controlled according to the intelligent device information in the execution mode.

In some embodiments, the processor 410 is configured to execute the intelligent device control program stored in the memory 420, to further implement the following steps of: acquiring the previous execution mode after receiving an operation instruction transmitted by the input device through a wireless transmission manner or a wire transmission manner.

In some embodiments, the input device is a device including a mechanical control element or a virtual key.

In some embodiments, the mechanical control element is a rocker control element or a roller control element.

An embodiment of the present invention also provides a computer storage medium. The computer storage medium here stores one or more programs. The storage medium may include a transitory memory, such as a random access memory, or may include a non-transitory memory, such as a read-only memory, a flash memory, a hard disk, or a solid-state hard disk; the memory may also include a combination of the above types of memories.

One or more programs in the computer storage medium can be executed by one or more processors to implement the above-mentioned control method for the intelligent device.

Specifically, the processor is configured to execute the intelligent device control program stored in the memory to implement the following steps of: acquiring the previous execution mode after receiving the operation instruction transmitted by the input device; adjusting the parameter value in the execution mode according to the variable value corresponding to the operation instruction; generating the control instruction according to the adjusted execution mode, and transmitting the control instruction to the intelligent device to be controlled.

In some embodiments, before receiving the operation instruction transmitted by the input device, the method further includes steps of: receiving the execution mode transmitted by the voice module; storing the execution mode transmitted by the voice module, and generating the control instruction according to the execution mode transmitted by the voice module, to transmit the control instruction to the intelligent device to be controlled. The execution mode transmitted by the voice module is obtained by collecting voice information inputted by the user and performing voice recognition on the voice information.

In some embodiments, the step of acquiring the previous execution mode includes a step of reading the previously stored execution mode; and the step of generating the control instruction according to the adjusted execution mode includes steps of updating the previously stored execution mode and generating the control instruction according to the adjusted execution mode.

In some embodiments, the operation instruction transmitted by the input device is a first operation instruction or a second operation instruction; a variable value corresponding to the first operation instruction is "+1"; a variable value corresponding to the second operation instruction is "-1".

In some embodiments, before the step of transmitting the control instruction to the intelligent device to be controlled, the method further includes steps of: determining the intelligent device corresponding to the mode parameter in the execution mode as the intelligent device to be controlled according to a preset corresponding relationship between the mode parameter and the intelligent device, or, determining the intelligent device corresponding to intelligent device information as the intelligent device to be controlled according to the intelligent device information in the execution mode.

In some embodiments, the step of acquiring the previous execution mode after receiving the operation instruction transmitted by the input device includes a step of acquiring the previous execution mode after receiving the operation instruction transmitted by the input device through a wireless transmission manner or a wire transmission manner.

In some embodiments, the input device is a device including a mechanical control element or a virtual key.

In some embodiments, the mechanical control element is a rocker control element or a roller control element.

It will be easy for those skilled in the art to conceive other embodiments of the present invention after considering the description and the invention disclosed herein. The present application is designed to cover any variations, uses, or adaptive changes of the present invention. These variations, uses, or adaptive changes follow the general principles of the present invention and include common knowledge or conventional technical means in the technical field not invented by the present application. The description and embodiments are merely regarded as exemplary, and the protection scope of the present invention is subject to the following claims.

It should be appreciated that the present invention is not limited to the precise structure described above and shown in the drawings, and various modifications and variations can be made without departing from the scope. The scope of the present invention is only limited by the appended claims.

## Claims

1. A control method for an intelligent device, comprising:
acquiring (S110) an execution mode after receiving an operation instruction transmitted by an input device;
adjusting (S120) a parameter value in the execution mode according to a variable value corresponding to the operation instruction;
generating (S130) a control instruction according to an adjusted execution mode, and transmitting the control instruction to the intelligent device to be controlled;
the method **characterized by**:
before receiving the operation instruction transmitted by the input device,
receiving (S310) an execution mode transmitted by a voice module;
storing (S320) the execution mode transmitted by the voice module, and generating a control instruction according to the execution mode transmitted by the voice module, so as to transmit the control instruction to the intelligent device to be controlled;
wherein the execution mode transmitted by the voice module is obtained by collecting voice information inputted by a user and performing voice recognition on the voice information;
wherein the acquiring the execution mode comprises: reading (S340) a previously stored execution mode;
wherein before generating the control instruction according to the adjusted execution mode, updating (S360) the previously stored execution mode;
wherein the acquiring the execution mode after receiving the operation instruction transmitted by the input device comprises:
acquiring the execution mode after receiving the operation instruction transmitted by the input device through a wireless transmission manner or a wire transmission manner.

2. The control method for the intelligent device according to claim 1, wherein
the operation instruction transmitted by the input device is a first operation instruction or a second operation instruction;
a variable value corresponding to the first operation instruction is "+1", a variable value corresponding to the second operation instruction is "-1".

3. The control method for the intelligent device according to claim 1, further comprising:
before transmitting the control instruction to the intelligent device to be controlled,
determining an intelligent device corresponding to a mode parameter in the execution mode as the intelligent device to be controlled according to a preset corresponding relationship between a mode parameter and an intelligent device; or
determining an intelligent device corresponding to intelligent device information in the execution mode as the intelligent device to be controlled according to the intelligent device information.

4. The control method for the intelligent device according to any one of claims 1 to 3, wherein the input device is a device comprising a mechanical control element or a virtual key.

5. The control method for the intelligent device according to claim 4, wherein the mechanical control element is a rocker control element or a roller control element.

6. The control method for the intelligent device according to claim 1, wherein the operation instruction transmitted by the input device is configured to adjust the parameter value in the execution mode, so as to obtain a new execution mode.

7. A control apparatus (400) for an intelligent device, comprising a processor (410) and a memory (420), the processor (410) being configured to execute an intelligent device control program stored in the memory (420) to implement the control method for the intelligent device of any one of claims 1 to 6.

8. A computer storage medium, storing one or more programs capable of being executed by one or more processors to implement the control method for the intelligent device of any one of claims 1 to 6.

## Patentansprüche

1. Steuerverfahren für eine integrierte Vorrichtung, das Folgendes umfasst:
Erfassen (S110) eines Ausführungsmodus nach dem Empfangen einer Betriebsanweisung, die durch eine Eingabevorrichtung gesendet wird;
Einstellen (S120) eines Parameterwerts in dem Ausführungsmodus gemäß einem Variablenwert, der der Betriebsanweisung entspricht;
Erzeugen (S130) einer Steueranweisung gemäß einem eingestellten Ausführungsmodus und Senden der Steueranweisung an die zu steuernde intelligente Vorrichtung;
wobei das Verfahren **gekennzeichnet ist durch**:
Empfangen (S310) eines Ausführungsmodus, der **durch** ein Sprachmodul gesendet wird, vor dem Empfangen der Betriebsanweisung;
Speichern (S320) des Ausführungsmodus, der **durch** das Sprachmodul gesendet wird, und Erzeugen einer Steueranweisung gemäß dem Ausführungsmodus, der **durch** das Sprachmodul gesendet wird, um die Steueranweisung an die zu steuernde intelligente Vorrichtung zu senden;
wobei der Ausführungsmodus, der **durch** das Sprachmodul gesendet wird, **durch** Sammeln von Sprachinformationen, die **durch** einen Anwender eingegeben werden, und Durchführen von Spracherkennung auf den Sprachinformationen erhalten wird;
wobei das Erfassen des Ausführungsmodus Folgendes umfasst: Lesen (S340) eines zuvor gespeicherten Ausführungsmodus;
Aktualisieren (S360) des zuvor gespeicherten Ausführungsmodus vor dem Erzeugen der Steueranweisung gemäß dem eingestellten Ausführungsmodus;
wobei das Erfassen des Ausführungsmodus nach dem Empfangen der Betriebsanweisung, die **durch** die Eingabevorrichtung gesendet wird, Folgendes umfasst:
Erfassen des Ausführungsmodus nach dem Empfangen der Betriebsanweisung, die **durch** die Eingabevorrichtung gesendet wird, auf eine drahtlose Übertragungsweise oder eine drahtgebundene Übertragungsweise.

2. Steuerverfahren für die intelligente Vorrichtung nach Anspruch 1, wobei
die Betriebsanweisung, die durch die Eingabevorrichtung gesendet wird, eine erste Betriebsanweisung oder eine zweite Betriebsanweisung ist;
ein Variablenwert, der der ersten Betriebsanweisung entspricht, "+1" ist und ein Variablenwert, der der zweiten Betriebsanweisung entspricht, "-1" ist.

3. Steuerverfahren für die intelligente Vorrichtung nach Anspruch 1, das ferner Folgendes umfasst:
vor dem Senden der Steueranweisung an die zu steuernde intelligente Vorrichtung
Bestimmen einer intelligenten Vorrichtung, die einem Modusparameter in dem Ausführungsmodus entspricht, als die zu steuernde intelligente Vorrichtung gemäß einem im Voraus eingestellten entsprechenden Verhältnis zwischen einem Modusparameter und einer intelligenten Vorrichtung oder
Bestimmen einer intelligenten Vorrichtung, die Informationen über eine intelligente Vorrichtung in dem Ausführungsmodus entspricht, als die zu steuernde intelligente Vorrichtung gemäß den Informationen über die intelligente Vorrichtung.

4. Steuerverfahren für die intelligente Vorrichtung nach einem der Ansprüche 1 bis 3, wobei die Eingabevorrichtung eine Vorrichtung ist, die ein mechanisches Steuerelement oder eine virtuelle Taste umfasst.

5. Steuerverfahren für die intelligente Vorrichtung nach Anspruch 4, wobei das mechanische Steuerelement ein Wippensteuerelment oder ein Rollensteuerelement ist.

6. Steuerverfahren für die intelligente Vorrichtung nach Anspruch 1, wobei die Betriebsanweisung, die durch die Eingabevorrichtung gesendet wird, konfiguriert ist, den Parameterwert in dem Ausführungsmodus einzustellen, um einen neuen Ausführungsmodus zu erhalten.

7. Steuereinrichtung (400) für eine intelligente Vorrichtung, die einen Prozessor (410) und einen Speicher (420) umfasst, wobei der Prozessor (410) konfiguriert ist, ein Steuerprogramm einer intelligenten Vorrichtung, das in dem Speicher (420) gespeichert ist, auszuführen, um das Steuerverfahren für die intelligente Vorrichtung nach einem der Ansprüche 1 bis 6 zu implementieren.

8. Computerspeichermedium, das ein oder mehrere Programme gespeichert hat, die durch einen oder mehrere Prozessoren ausgeführt werden können, um das Steuerverfahren für die intelligente Vorrichtung nach einem der Ansprüche 1 bis 6 zu implementieren.

## Revendications

1. Procédé de commande pour un dispositif intelligent, comprenant :
l'acquisition (S110) d'un mode d'exécution après avoir reçu une instruction d'opération transmise par un dispositif d'entrée ;
l'ajustement (S120) d'une valeur de paramètre dans le mode d'exécution selon une valeur de variable correspondant à l'instruction d'opération ;
la génération (S130) d'une instruction de commande selon un mode d'exécution ajusté, et la transmission de cette instruction de commande au dispositif intelligent devant être commandé ;
ce procédé étant **caractérisé par** :
avant la réception de l'instruction d'opération transmise par le dispositif d'entrée,
la réception (S310) d'un mode d'exécution transmis par un module vocal ;
le stockage (S320) du mode d'exécution transmis par le module vocal, et la génération d'une instruction de commande selon le mode d'exécution transmis par le module vocal, de façon à transmettre l'instruction de commande au dispositif intelligent devant être commandé ;
le mode d'exécution transmis par le module vocal étant obtenu en recueillant des informations vocales entrées par un utilisateur et en exécutant une reconnaissance vocale sur les informations vocales ;
l'acquisition du mode d'exécution comprenant : la lecture (S340) d'un mode d'exécution stocké antérieurement ;
avant la génération de l'instruction de commande selon le mode d'exécution ajusté, la mise à jour (S360) du mode d'exécution stocké antérieurement ;
l'acquisition du mode d'exécution après la réception de l'instruction d'opération transmise par le dispositif d'entrée comprenant :
l'acquisition du mode d'exécution après la réception de l'instruction d'opération transmise par le dispositif d'entrée au moyen d'une transmission sans fil ou au moyen d'une transmission par fil.

2. Procédé de commande pour le dispositif intelligent selon la revendication 1, l'instruction d'opération transmise par le dispositif d'entrée étant une première instruction d'opération ou une deuxième instruction d'opération ;
une valeur de variable correspondant à la première instruction d'opération étant "+1", une valeur de variable correspondant à la deuxième instruction d'opération étant "-1".

3. Procédé de commande pour le dispositif intelligent selon la revendication 1, comprenant en outre :
avant la transmission de l'instruction de commande au dispositif intelligent devant être commandé,
la détermination d'un dispositif intelligent correspondant à un paramètre de mode dans le mode d'exécution comme le dispositif intelligent devant être commandé selon un rapport correspondant prédéterminé entre un paramètre de mode et un dispositif intelligent ; ou
la détermination d'un dispositif intelligent correspondant aux informations de dispositif intelligent dans le mode d'exécution comme le dispositif intelligent devant être commandé selon les informations de dispositif intelligent.

4. Procédé de commande pour le dispositif intelligent selon l'une quelconque des revendications 1 à 3, dans lequel le dispositif d'entrée est un dispositif comprenant un élément de commande mécanique ou une clé virtuelle.

5. Procédé de commande pour le dispositif intelligent selon la revendication 4, dans lequel l'élément de commande mécanique est un élément de commande à bascule ou un élément de commande à galet.

6. Procédé de commande pour le dispositif intelligent selon la revendication 1, dans lequel l'instruction d'opération transmise par le dispositif d'entrée est configurée de façon à ajuster la valeur du paramètre dans le mode d'exécution, afin d'obtenir un nouveau mode d'exécution.

7. Appareil de commande (400) pour un dispositif intelligent, comprenant un processeur (410) et une mémoire (420), le processeur (410) étant configuré de façon à exécuter un programme de commande de dispositif intelligent stocké dans la mémoire (420) afin de mettre en œuvre le procédé de commande pour le dispositif intelligent selon l'une quelconque des revendications 1 à 6.

8. Support de stockage informatique, stockant un ou plusieurs programmes capables d'être exécutés par un ou plusieurs processeurs afin de mettre en œuvre le procédé de commande pour le dispositif intelligent selon l'une quelconque des revendications 1 à 6.
